# EUROPEAN PATENT APPLICATION

(11) **EP 2 455 709 A1**
(43) Date of publication of application: **23.05.2012**
(21) Application number: 11188603.2
(22) Date of filing: 10.11.2011
(51) Int. Cl.: G01B 11/25

(54) **Surface coating for inspection**

(30) Priority: 18.11.2010 GB 201019522
(71) Applicant: Rolls-Royce plc, London SW1E 6AT (GB)
(72) Inventor: Pulisciano, Adriano, Birmingham, West Midlands B24 0SG (GB); Bamforth, Philip, Loughborough, Leicestershire LE11 4SR (GB); Simmons, Christopher, Burton on Trent, Staffordshire DE14 3EY (GB); Clark, Daniel, Derby, Derbyshire DE56 1TG (GB)
(74) Representative: Yeomans, Victoria Jane Anora

(57) **Abstract**

A method of inspecting an article, comprising applying an organic liquid substance over at least a portion of the article to be inspected so as to form a surface layer thereon, wherein said surface layer is luminescent. The article is irradiated with the surface layer thereon; and, scanning the article to determine its shape.

## Description

The present invention relates to surface coatings and more particularly to the use of coatings to allow inspection of physical products or components. The use of structured-light scanners is becoming more widespread in industry for performing full field 3D measurement of articles. Such equipment has a number of uses including reverse engineering and modelling of products as well as quality control as part of production or prototyping. Systems of this kind have been found to be particularly useful as part of an inspection process for high-value engineering components, such as those used within gas turbine engines or other industrial machinery.

Successful optical scanning of an object requires adequate illumination. Illumination techniques are an important and complex consideration for process capability, not least because objects may have complex forms, including, for example, internal or occluded features.

In order to achieve high accuracy 3D digitisation, it is important that the component surface has a matt diffuse surface finish, in the manner of - for example - a Lambertian surface, so as to avoid unwanted specular reflections, which create a non-linear intensity response. These specular reflections or 'glare' add an unwanted noise level to the image capture, which is a poignant issue for the measurement of shiny and/or concave surfaces in particular. Metallic components are known to be susceptible to such issues although the problem is not exclusive thereto.

In order to create a diffuse surface finish, it is conventional to coat an object to be scanned with a powder developer. Powder coatings of this nature also work to reduce the effective dynamic range required by the image capture system. However there exist a number of problems with conventional powder coatings as follows:
- Poor uniformity of the powder coating thickness and coverage limits precision of the resulting 3D measurement.
- The typical coating thickness may be in the region of 25 µm, which is ultimately dependent on the powder particle size. For some components, such as thin aerofoils, which are manufactured to a high tolerance a coating of such a thickness on both sides can greatly affect the accuracy of measurement.
- Powder coating application and removal may involve multiple operations, waste products and time in a process with limited permissible process time. For components such as fan blades within a gas turbine engine, there can be as many as seven 3D measurement operations during manufacture, each requiring the application of a new powder coating and subsequent removal before any machining.
- The powder may clog passageways in the components being measured (e.g. cooling holes in turbines and combustors) and remnant powder may interfere with downstream processing operations.
- Handling of fine powder presents an issue of powder entrainment into convection currents, which can lead to dispersal problems for health and safety as well as cleanliness problems for other processes. These issues conventionally require bespoke dust extraction and physical control measures.
- Access for powder coating delivery and removal can be a problem, especially if the component is intended to be scanned once assembled within a larger product, for example in service or immediately prior to service.

It is an aim of the present invention to provide for scanning techniques which avoid or mitigate some or all of the above-listed problems.

According to a first aspect of the present invention there is provided a method of inspecting an article, comprising: applying an organic liquid substance over at least a portion of the article to be inspected so as to form a surface layer thereon; and, scanning the article to determine its shape.

According to one embodiment, scanning the article comprises non-contact scanning. Scanning the article may comprise optically scanning the article. One or more photoelectic sensor/detector may be arranged to receive light emanating from the article surface layer. A camera or other conventional sensing means may be used.

in one embodiment said layer is photoluminescent and may be fluorescent or phosphorescent. Electromagnetic radiation from a photoluminescent surface layer may provide a suitably diffuse radiation or light source which may be used to facilitate scanning of the article.

The method may comprise filtering the electromagnetic radiation emanation from the article surface layer prior to receipt by a photoelectric sensor. The method may comprise filtering of electromagnetic radiation emanating from the article surface layer in order to remove radiation reflected from the surface layer. A threshold wavelength may be set for filtering in order to remove some or all reflected light. Typically the filtering allows light radiated by the surface layer to reach the sensor. In this manner, the incident illumination, which conventionally contributes to specular reflections on shiny surfaces, can be filtered out optically.

The method may include irradiating or otherwise energising the surface layer. The surface layer may be heated or irradiated with visible, UV or infra-red radiation. The surface layer may fluoresce in response. The surface layer may be tailored to fluoresce at a different colour/wavelength from the incident illumination source.

Optically scanning the article may comprise scanning the article in one or more of a plurality of scanning or imaging modes. One scanning mode may be used to determine the location of points on the article surface layer. One scanning mode may be used to determine one or more surface properties of the article surface.

The surface layer may be actively removed as a part of the method or else may be allowed to degrade.

According to a second aspect of the invention there is provided a system for inspecting an article comprising equipment arranged to perform the method of the first aspect.

One or more working embodiments of the present invention are described in further detail below by way of example with reference to the accompanying drawings, of which:
Figure 1 shows a flow diagram of the basic stages of an inspection method according to one embodiment of the present invention;
Figure 2 shows processes which may be used to apply a surface layer to an article in accordance with embodiments of the invention; and,
Figure 3 shows details of the scanning process according to one embodiment of the invention.

The invention relates to the use of a surface coating which is applied in liquid form and which can serve as a standard reference surface for 3D digitisation in metrology with a vision system. This may entail the creation of a Lambertian surface coating. The surface may also allow for multi-functional use in that it may offer secondary use in the assessment of surface characteristics, such as, for example, in the field of corrosion or defect detection.

Imaging technology is often sought after because it offers a non-contact solution. The application of a powder coating in a conventional manner to allow 3D vision measurement of shiny free-form components is undesirable and has a negative effect on cycle times in manufacturing and can impact on measurement uncertainty in high tolerance applications.

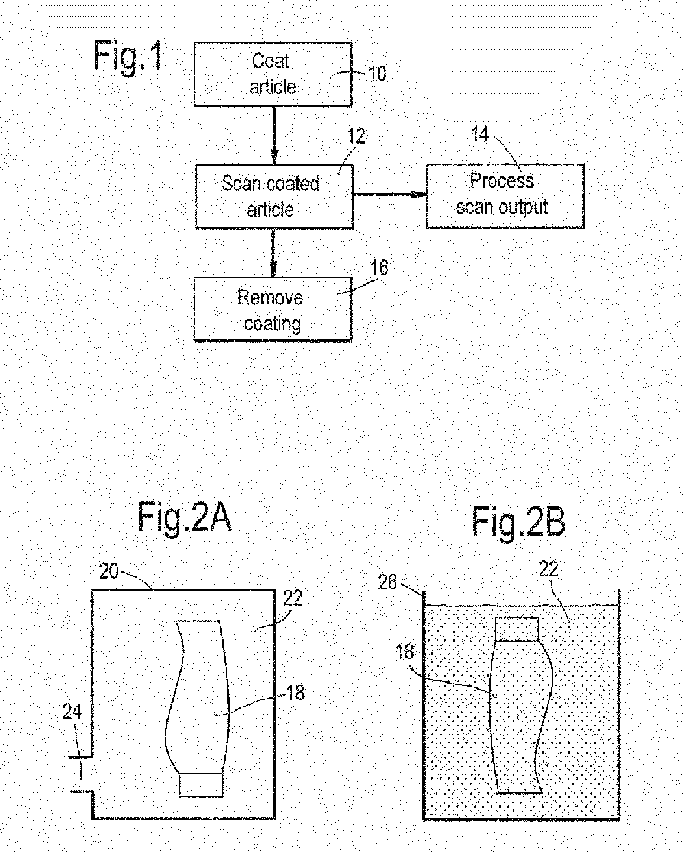

Turning now to figure 1, there is shown a flow diagram of the basic steps according to one aspect of the present invention. In step 10, a liquid is applied to an article that is to be scanned. The liquid is applied in a manner such that it forms a thin film coating over the region of the article that is to be scanned. Typically this will involve coating the entire article, although only part of the article may require scanning dependent on the product or component in question.

The average thickness of the coating will be less than 10 µm, and typically less than 5 µm. For high tolerance applications the thickness of the coating may be controlled to be less than 2 µm or even less than 1µm using the below-described techniques.

The following description proceeds in relation to a gas turbine engine component in particular. However it will be appreciated that the method and system described may equally be applicable to any three-dimensional product. High value, precision engineering components are particularly suited to such a process. Rotor blades on engines, turbines and pumps are examples of such components for which the shape of the component is crucial to its operational efficiency and for which there exists a need to closely monitor geometry. Such components also typically have a surface finish which is prone to reflections when illuminated.

At stage 10, a metallic component is coated with an organic substance in solution. The liquid coating may be applied to the surface of the article by any known deposition method, including dipping, spraying, brushing and painting. Numerous methods of applying a solution to a surface are well-known in the art and may be applied in accordance with the present invention. It is a general requirement that the application of the solution allows the article surface layer to be applied substantially homogeneously over the portion of the surface to be scanned.

Preferably, the sensor is applied as an aqueous solution. Water is an inexpensive solvent that is readily available and has no impact on waste management or the environment. Furthermore the use of water and other readily available materials allows the chemical agent to be formed in-situ at a manufacturing or product inspection facility.

Two examples of coating processes which are considered suitable for use in accordance with the invention are shown schematically in figures 2A and 2B.

In figure 2A, the article 18 takes the exemplary form of a fan blade. The article 18 is placed inside a chamber 20, which forms a part of an industrial nebulizer. The coating liquid 22 is atomised using conventional means such as atomisation nozzle(s) and/or heating equipment and enters the chamber 20 in which the article 18 is held via inlet 24.

The properties of the liquid are such that it can be delivered in this manner as a mist 22 which forms a thin film on the article surface with a thickness potentially less than 5 µm or even potentially less than 2 or 1 µm. Application in mist form with an industrial nebuliser makes the coating process quick and controllable. In this example, the article 18 may be cooled to promote condensation of the mist 22 on the substrate. It should be noted that applying the liquid in mist form will require use of a controlled atmosphere cabinet/chamber 20 with appropriate filters.

In figure 2B, the article 18 is immersed in a tank 26 containing the coating 22 in liquid form as part of a dip coating process.

In any of the above proposed coating processes, the liquid substance (or agent) may comprise a Lewis base. A Lewis base group is an atomic or molecular species that may donate electrons to an electron-deficient moiety, e.g. a Lewis acid. Lewis base groups typically have an accessible lone pair of electrons. These lone pairs are often in the HOMO. Examples of Lewis base groups include compounds of N, P, As, Sb and Bi in oxidation state 3, compounds of O, S, Se and Te in oxidation state 2, including water, ethers, ketones and sulphoxides and molecules such as carbon monoxide.

In this example, the coating substance comprises a polyhistadine with a Lewis base which is suitable for bonding to the metal substrate. The substance comprises a fluorophore tag (fluorescent end component of the molecule).

Examples of the potential make-up of the solution to be applied to the article surface can be found in PCT/GB2010/000769 which was published as WO 2010-122287A1 in the name of ROLLS-ROYCE PLC, which is hereby incorporated by reference.

According to some embodiments, the coating may comprise an aromatic or aliphatic heterocyclic group. Suitable examples of the heterocyclic group include, but are not limited to pyrrole, furan, thiophene, pyrazole, imidazole, oxazole, isoxazole, thiazole, isothiazole, triazole, thiatriazole, pyridine, pyran, thiapyrane, piperizine, oxazine, thiazine, and their derivatives.

Preferably, the coating includes an α-amino acid. α-Amino acids possess electron-rich N and O Lewis basic groups. Furthermore, they are readily available and their chemistry is well understood. Many α-amino acids also include an electron-rich atom in the α-amino acid side chain i.e. in R if the α-amino acid is represented by the formula: H₂NCH(R)COOH. These are of particular interest and include, but are not limited to lysine, histidine, methionine, threonine, tryptophan, asparagine, aspartic acid, glutamate, glutamine, serine, tyrosine, arginine and cysteine, and their derivatives.

More preferably, the coating contains a histidine moiety. Histidine contains an imidazole group in the α-amino acid side chain. Imidizole groups, as described herein, have an affinity for electron deficient transition metals, and in particular for Ni(II).

More preferably, the coating layer comprises an oligomer or polymer, wherein the repeating units comprise oxidation state discriminating groups. Preferably the coating material comprises a polymer of the Lewis base.

Polymers may be more easily isolated and purified as compared to monomer analogues. A polymer material may also cooperatively bind to the surface. A further advantage of a polymer is that it may be possible to tailor the size of the active material to particular features on the surface. For example, it may be possible to adapt the size of the (e.g. by varying the number of repeating units) to the size of a surface feature.

Preferably, the sensor comprises a polymer with repeating units that include an imidazole group, for example poly(histidine). Preferably, the sensor comprises a polymer of imidazole repeating units, in other words, poly(imidazole).

Preferably, the material further includes; is attached to; is integral with; is bonded to; or is conjugated with a probe group. The skilled reader will recognise that there are many probe groups that may be used to produce a signal to be detected. For example, the probe may be a luminescent or radio-active group.

Preferably the probe group is a luminescent group. An advantage of luminescent materials is that they are easily handled and, in contrast to radioactive materials, their radiation, generally, does not cause harm to humans.

Luminescent groups may be photoluminescent, chemoluminescent or electroluminescent. Preferably, the probe group is photoluminescent. Photoluminescent groups may be fluorescent or phosphorescent.

Preferably, the probe group is fluorescent or a fluorophore. Fluorescence is well understood and there are many fluorophores known in the art. Such fluorophores include, but should not be limited to, fluorescein, fluorescein isothiocyanate (FITC), any member of the rhodamine series, coumarin, cyanine, calcein, oregon green, leucophor, dansyl, phorwhite, any member of the Alexa fluor series and any member of the SYTO series.

Other fluorophores that may be used may be found in Haugland, R. 1996. Handbook of Fluorescent Probes and Research Chemicals, 6th ed. Molecular Probes, Inc., and Eugene, Oregon. & Herman, B. 1998 Fluorescence Microscopy. Bios Scientific Publishing, Oxford, England, both of which are incorporated herein.

Preferably the fluorophore is fluorescein or a fluorescein derivative. Fluorescein is a widely used fluorophore that emits in the yellow range of the visible spectrum.

An amine group in a poly-histidine may be reacted with fluorescein isothiocyanate to form a poly-histidine-fluorescein conjugate. The conjugate may be formed before the sensor is applied to the alloy surface. The conjugate may be formed on the alloy surface after the sensor has been applied to the surface.

The film adheres to the metal substrate by weak chemical bonding (e.g. Van der Waals), which means there is no change to the surface chemistry. When irradiated with visible, UV or infra-red radiation the film exhibits the property of fluorescence.

The method has further advantages of being applicable to a large surface area. This allows the method to be used to analyse different areas of a component simultaneously. The method also benefits from not being restricted by complex alloy component shape or undulation. The coating may be applied to any metal/alloy surface regardless of its form. This is particularly relevant to aeronautical components.

The proposed surface coating is an organic chemical agent that has fluorescent properties and it is both cheap and REACH compliant. The application of the organic chemical is less sensitive to line of sight coverage than a typical powder coating. This means that the film coverage is much more controllable. The coverage of the film is promoted by surface tension and flow as well as the chemical weak bonding of the chemical agent to the metal substrate.

The liquid could be delivered to remote access locations i.e. it can flow down capillaries without blockages or be delivered at a distance by a spray.

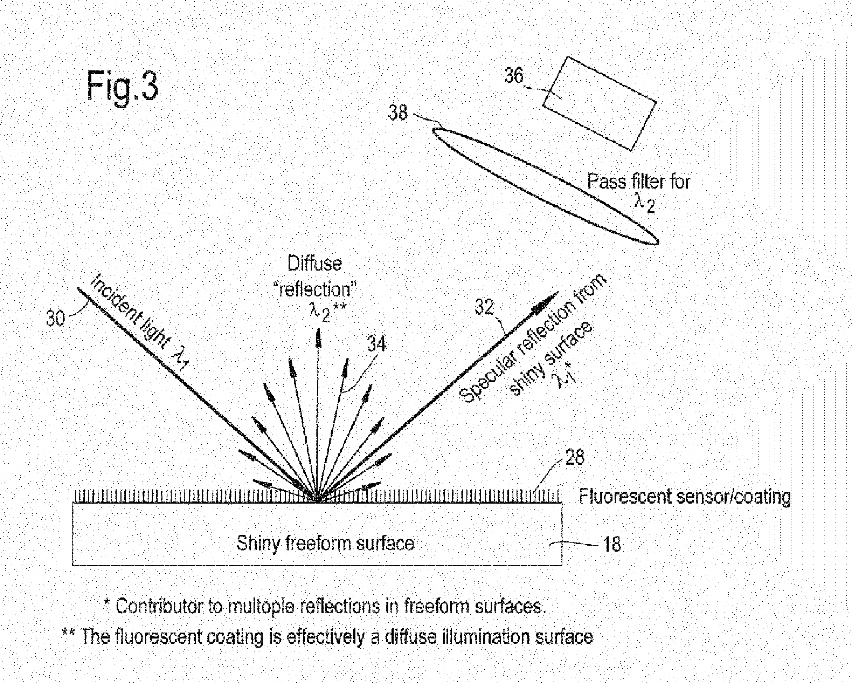

At stage 12 of the process in figure 1, the article 18 is scanned using a non-contact 3D scanner. Turning to figure 3, the article surface, including the surface layer 28 formed thereon is positioned in a controlled environment and illuminated by a suitable lighting source (not shown). In other embodiments, UV or IR radiation may be directed onto the surface in addition to, or instead of, visible light.

The incident light 30 is in part reflected by the surface layer 28, causing a specular reflection 32. The irradiation of the surface layer 28 also causes incident illumination under the act of fluorescence of the surface coating 28. Thus the surface layer emits light 34 of a different wavelength to that of the reflected rays 32. The light 34 emitted from the surface is diffuse in nature as compared to the reflections 32.

A conventional photoelectic sensor/detector arrangement 36 is positioned within the controlled environment to receive light emanating from the article surface layer. A camera or other conventional sensing means may be used.

A filter 38 is located in the path between the article 18 and sensor 36 and is arranged to filter out radiation of a wavelength corresponding to that of the reflections 32, whilst allowing wavelengths corresponding to a more diffuse light to pass to the sensor 36. Thus illumination and hence specular reflections associated with reflective surfaces can be optically filtered. In such an embodiment, the fluorophore on the organic chemical can be tailored to fluoresce at a different colour to the incident illumination source. With the application of appropriate optics and filters the incident wavelengths that contribute to specular reflections can be removed.

Conventional three-dimensional vision systems may be tailored to the purpose of the present invention. Such systems may produce point cloud data for the inspected surface which can be used at step 14 (figure1) in later processing stages to generate a computer model for the surface to assess the acceptability of the surface against predefined acceptance criteria. This stage may include sentencing to check the article geometry against criteria such as dimensions, curvature and the like within allowable thresholds.

The organic chemical film of the present embodiment can be applied as a coating which is substantially thinner than powder coatings that are currently used to allow 3D structured light scanning of shiny free-form components. This can benefit the attainable measurement certainty of the 3D vision system.

Since the thin film is created by chemical weak bonding to the metal substrate agglomeration can be avoided by careful optimisation of the chemical agent (e.g. viscosity, wetting angle, choice of fluorophore and choice of lewis base for an application). Furthermore, since the thickness of the film could potentially be less than 1µm, any potential agglomeration is not likely to limit the attainable measurement uncertainty of 3D structured light scanners as is the case with powder coatings.

At stage 16, the surface layer 28 may be removed. The chemical agent as described above is easily removed from the article, for example by thermal decomposition or by rinsing in dilute, non-toxic, low pH acid. In this manner, the chemical film can be broken down into harmless component chemicals. Such removal techniques may be far less onerous than the existing powder handling and removal requirements.

However the present invention may allow further advantages since, dependent on the downstream operations for the article, there is the potential to allow the coating to degrade naturally. This is in part due to the surface dimensions and inert nature of the coating which may not impede subsequent processing or testing or operational use of the article.

The preferred method for removal would be to leave it to degrade naturally. In the example of fan blades for a gas turbine engine, an inert substrate of this kind is not likely to interfere with any subsequent manufacturing processes e.g. polishing or milling of fan blades.

The application of the fluorescent chemical agent as described above could enhance the field of automated defect inspection of shiny components. Machine vision technologies are being exploited to identify subtle surface features such as scratches and pitting that are >25 µm. The application of the chemical agent could increase the robustness of detection with 2D vision whilst also allowing subsequent 3D measurement with fringe projection.

In further embodiments of the invention, the coating could be tailored to provide secondary functions. For example, the fluorescent properties of the surface can be exploited as an indicator of surface finish, texture, lay, corrosion, cracking or spallation.

The action of fluorescence can be used as a marker for the detection of corrosion (or other metal substrate property) whilst also promoting diffuse reflection and/or emission for successful 3D digitisation. It is possible that one or more sources of a controlled bandwidth wavelength of light can be implemented. This is not restricted to visible light and could involve UV illumination and it might even be possible to use component heating to induce fluorescence. In this fashion a range of surface characteristics can be probed simultaneously if a mixture of chemical agents, each with different substrate sensitivities, is applied. More than one type of lewis base and/or flourophore may be used simultaneously, to allow discrimination and registration of different features or regions.

A number of examples of chemicals suitable to achieve corrosion detection are given in the incorporated reference PCT/GB2010/000769 which was published as WO 2010-122287A1 in the name of ROLLS-ROYCE PLC.

For example, the surface layer may act as a sensor in the meaning of PCT/GB2010/000769 and may comprise a heteroaromatic group. Heteroaromatic are more electron-rich than aliphatic groups and so increase the affinity of the sensor to the first transition metal in an oxidation state greater than zero. Suitable examples of the heterocyclic group include, but are not limited to pyrrole, imidazole, pyrazole, oxazole, thiaozle, pyridine, pyridazine, pyrimidine and pyrazine and their derivatives.

More preferably, the sensor comprises an imidazole or imidazolium unit. The present inventors have found that imidazole groups have a particular affinity for Ni(II) over Ni(0) in alloy surfaces. Imidazole groups are suitable for use in a sensor to discriminate between transition metals in different oxidation states in a surface layer of an alloy.

The sensor and any of its optional groups may be optionally substituted. Optional substituents include, but should not be limited to: halo; hydroxy; ether (e.g., C₁₋₇alkoxy); formyl; acyl (e.g., C₁₋₇alkylacyl , C₅₋₂₀arylacyl); acylhalide; carboxy; ester; acyloxy; amido; acylamido; thioamido; tetrazolyl; amino; nitro; nitroso; azido; cyano; isocyano; cyanato; isocyanato; thiocyano; isothiocyano; sulfhydryl; thioether (e.g., C₁₋₇alkylthio); sulfonic acid; sulfonate; sulfone; sulfonyloxy; sulfinyloxy; sulfamino; sulfonamino; sulfinamino; sulfamyl; sulfonamido; C₁₋₇alkyl (including, e.g., unsubstituted C₁₋₇alkyl, C₁₋₇haloalkyl, C₁₋₇hydroxyalkyl, C₁₋₇carboxyalkyl, C₁₋₇aminoalkyl, C₅₋₂₀aryl-C₁₋₇alkyl); C₃₋₂₀heterocyclyl; or C₅₋₂oaryl (including, e.g., C₅₋₂₀carboaryl, C₅₋₂₀heteroaryl, C₁₋₇alkyl-C₅₋₂₀aryl and C₅₋₂₀haloaryl)).

Preferably, the sensor comprises a plurality of oxidation state discriminating groups. By increasing the number of oxidation state discriminating groups, the sensor may benefit from cooperative binding to the alloy surface. Cooperative binding is an effect associated with coordinating molecules that have more than one binding group. The binding potential of a second and subsequent binding groups is usually reduced when a first binding group is associated with the species to be bound.

More preferably, the sensor comprises a polymer of α-amino acid oxidation state discriminating groups. α-amino acids are easily polymerised to form peptide linkages. In a more preferred embodiment, the sensor comprises poly(histidine). Poly(histidine) contains repeating units that include an imidazole group. The present inventors have shown that these sensors may selectively associate with transition metals in an oxidation state greater than zero.

The polymer sensor may have any number of repeating units. Preferably, the polymer sensor has 100 or fewer repeating units. Preferably, the polymer sensor comprises between 5 and 50 repeating units. More preferably, the polymer sensor comprises between 15 and 40 repeating units. Most preferably, the polymer sensor comprises between 20 and 30 repeating units.

Described below are a number of further embodiments and uses of the invention which stem from the general premise of the creation of Lambertian surface for 3D structured light scanning. It is possible that the organic chemical film will exhibit sufficient fine structure so that passive stereo photogrammetry can also be utilised.

The chemical agent could be combined with the functionality of other agents e.g. bonding agents, stop-off, sealants, glazes, paints and oils (anticorrosion such as lanolin).

There is a potential application in thermal based NDT inspections. Following application of a heat source to the reverse side of a sample to the detector, the chemical agent can be used to enhance or simplify the measurement by using optical detectors rather than thermal detectors. The fluorescent response or van der waals attachment of the agent can be made sensitive to the NDT heating pattern.

The chemical agent could be used to give 3D spatial information to which machine vision NDT data capture (e.g. fluorescent penetrant inspection, magnetic penetrant inspection, eddy current probing, ultrasound etc) can be mapped in the data processing stages 14. It is possible that the electrostatic attachment pattern could be affected by magnetic fluxes used in Eddy current and MPI. These interactions could reveal additional fine resolution information about a component than may otherwise be obtained by interpretation of current signals alone. Similarly, interaction of the film with vibration modes from ultrasound could allow inference about the material structure. Waves of fluorescence and quenching could reveal passage of ultrasound waves across a surface.

The variation in fluorescence response may give information pertaining to strain if the component is subject to mechanical or thermal stimulus between or during measurement. For example measurement in the unloaded or loaded conditions, fixtured or unconstrained, locally heated (welding or merely a hot gas jet). Such an approach may assist in identifying strain concentrations. This strain mapping could be combined to simultaneous 3D measurement of the component.

In relation to potential strain measurement, the chemical agent could be combined with a matt or more reflective agent to create a surface speckle pattern to allow digital image correlation.

The organic chemical agent could be used to check and prove that a surface is clean. For example, prior to diffusion bonding, friction welding or electron beam welding. The chemical could be formulated to decompose under UV light into vaporous phases to allow optical confirmation of a clean surface prior to laser cleaning - for example to ensure no larger than expected particles or inorganic matter was present prior to an automated clean for a critical operation.

The chemical agent could be applied to engine parts or other products in-situ during on wing inspections. It would allow diffuse reflection from shiny components after delivery via borescope and allow 3D measurements whilst detecting for corrosion etc.

During standard 3D digitisation processes fiducial marks are placed on the component to allow alignment between multiple images, which are often required to cover the whole part. These are conventionally dot stickers but it is possible that discrete regions of higher intensity fluorescence from specific tailoring of the chemical agent could act as sources to triangulate with.

Standard reference artefacts used to test 3D optical measurement systems also have to be powder coated. Having greater control of this coating process would be of benefit and hence the application of the organic fluorescent chemical agent would be ideal. Currently, the standard artefacts are certified in an uncoated condition and then powder coated before being used to test the optical measurement systems.

Although this invention still requires the application of a coating it exhibits a number of beneficial properties as described above. Furthermore, since it offers the potential for multi-functionality it may have a positive impact on product cycle times.

The chemical agent is low cost and made with simple and readily available precursor chemicals. Furthermore, it is non-toxic and compliant to REACH legislation. The film agent can be chemically tailored via polymerisation processes to meet specific requirements, for example, bonding to particular surfaces, illumination conditions, inspection requirements, and operating temperatures.

## Claims

1. A method of inspecting an article (18), comprising:
applying an organic liquid substance (22) over at least a portion of the article to be inspected (18) so as to form a surface layer (28) thereon, wherein said surface layer (28) is luminescent;
irradiating the article (18) with the surface layer (28) thereon;
scanning the article (18); and
determining the surface shape of the article (18) on the basis of data obtained from the scan.

2. A method according to claim 1, wherein the liquid substance (22) forms a surface layer (28) on the article (18) of 10 µm thickness or less.

3. A method according to claim 1, wherein the liquid substance (22) forms a surface layer (28) on the article (18) of 5 µm thickness or less.

4. A method according to any preceding claim, wherein the surface layer (28) is photoluminescent.

5. A method according to any preceding claim, wherein surface layer (28) is fluorescent.

6. A method according to claim 4 or 5, wherein the irradiating the article (18) comprises illuminating the article (18) with light of a different wavelength to that of the light emitted by the photolumiescent surface layer (28).

7. A method according to any preceding claim, wherein the irradiating the article (18) comprises illuminating the article (18) with a plurality of light sources of different wavelengths.

8. A method according to any preceding claim, wherein the application of the surface layer (28) comprises a dip coating process.

9. A method according to any one of claims 1 to 8, wherein the application of the surface layer (28) comprises atomisation of the liquid substance (22) prior to deposition onto the article (18) surface.

10. A method according to any preceding claim, comprising:
filtering light emanating from the article surface layer (28).

11. A method according to claim 10, comprising filtering out specular reflections from light emanating from the article surface layer (28).

12. A method according to any preceding claim, comprising scanning the article using a three-dimensional vision system.

13. A method according to any preceding claim, wherein the article (18) is a gas turbine engine component.

14. A method according to any preceding claim, wherein the article (18) is a component in a larger machine and the inspection is performed on the component in situ.

15. An article inspection system, comprising:
means for applying an organic liquid substance (22) over at least a portion of an article (18) to be inspected so as to form a surface layer thereon (28), wherein said surface layer (18) is luminescent;
means for irradiating the article (18) with the surface layer (28) thereon;
and,
a photoelectric sensor (36) for scanning the article (18) to determine its surface shape on the basis of data obtained from the scan.
